# EUROPEAN PATENT APPLICATION

(11) **EP 3 032 873 A1**
(43) Date of publication of application: **15.06.2016**
(21) Application number: 14835328.7
(22) Date of filing: 07.08.2014
(51) Int. Cl.: H04W 28/16, H04W 48/10, H04W 92/18

(54) **WIRELESS BASE STATION DEVICE, WIRELESS TERMINAL DEVICE, WIRELESS COMMUNICATION SYSTEM, CONTROL METHOD FOR DIRECT INTER-TERMINAL COMMUNICATION, AND COMPUTER PROGRAM**

(30) Priority: 08.08.2013 JP 2013165515
(71) Applicant: KDDI Corporation, Tokyo 163-8003 (JP)
(72) Inventor: KITAGAWA Koichiro, Fujimino-shi Saitama 356-8502 (JP); AKIMOTO Yosuke, Fujimino-shi Saitama 356-8502 (JP); FUSHIKI Masashi, Fujimino-shi Saitama 356-8502 (JP); KONISHI Satoshi, Fujimino-shi Saitama 356-8502 (JP)
(74) Representative: Wallinger, Michael
(86) International application number: PCT/JP2014/070944
(87) International publication number: WO 2015/020173

(57) **Abstract**

In a radio communication system in which communication is possible between radio terminal apparatuses via a radio base station apparatus, the radio base station apparatus stores information regarding a permission condition of inter-terminal direct communication, which is direct communication between the radio terminal apparatuses, and controls execution of the inter-terminal direct communication based on the permission condition. The radio terminal apparatuses determine whether to execute the inter-terminal direct communication based on information transmitted from the radio base station apparatus and indicating whether execution of the inter-terminal direct communication is possible.

## Description

### TECHNICAL FIELD

The present invention relates to a radio base station apparatus, a radio terminal apparatus, a radio communication system, an inter-terminal direct communication control method, and a computer program.

Priority is claimed on Japanese Patent Application No. 2013-165515, filed August 8 2013, the content of which is incorporated herein by reference.

### BACKGROUND ART

In recent years, technologies for executing direct communication (inter-terminal direct communication) between terminals in cellular systems in which communication is possible between the terminals via base stations is being studied. For example, inter-terminal direct communication in the system succeeding Long Term Evolution (LTE) called LTE-Advanced being standardized by the 3rd Generation Partnership Project (3GPP) is being studied (e.g., Non Patent Document 1). As the inter-terminal direct communication, a case in which terminals inside communicable areas of base stations execute the communication and a case in which terminals outside of communicable areas of base stations execute the communication are being studied.

### Prior Art Documents

### Non-Patent Documents

Non-Patent Document 1: 3GPP, "Study on LTE Device to Device Proximity Services", RP-122009, Internet <URL:http://www.3gpp.org>
Non-Patent Document 2: 3GPP, TS 23.203

### SUMMARY OF INVENTION

### Problems to be solved by the Invention

In the conventional inter-terminal direct communication control technologies, there is a problem that terminals executing inter-terminal direct communication have to be managed.

The present invention has been made in view of such circumstances and an object thereof is to make it possible to manage terminals executing inter-terminal direct communication.

### Means for Solving the Problems

(1) A radio base station apparatus of the present invention is a radio base station apparatus of a radio communication system in which communication is possible between radio terminal apparatuses via the radio base station apparatus, the radio base station apparatus including: an inter-terminal direct communication permission condition storage unit which stores information regarding a permission condition of inter-terminal direct communication which is direct communication between the radio terminal apparatuses; and an inter-terminal direct communication control unit which controls execution of the inter-terminal direct communication based on the permission condition.
(2) In the radio base station apparatus described in the foregoing (1), the inter-terminal direct communication control unit may determine whether the execution of the inter-terminal direct communication is possible based on the permission condition and inter-terminal direct communication attribute information received from a radio terminal apparatus inside a communicable area of the radio base station apparatus.
(3) In the radio base station apparatus described in the foregoing (2), the inter-terminal direct communication attribute information may be included in an inter-terminal direct communication request from the radio terminal apparatus inside the communicable area of the radio base station apparatus and may be attribute information of the inter-terminal direct communication by the radio terminal apparatus inside the communicable area.
(4) In the radio base station apparatus described in the foregoing (3), the inter-terminal direct communication control unit may respond to the inter-terminal direct communication request regarding whether the execution of the inter-terminal direct communication by the radio terminal apparatus inside the communicable area is possible.
(5) In the radio base station apparatus described in the foregoing (2), the inter-terminal direct communication attribute information may be included in inter-terminal direct communication detection signaling received from the radio terminal apparatus inside the communicable area of the radio base station apparatus and may be attribute information of the inter-terminal direct communication by a radio terminal apparatus outside of the communicable area of the radio base station apparatus.
(6) In the radio base station apparatus described in the foregoing (5), the inter-terminal direct communication control unit may respond to the inter-terminal direct communication detection signaling regarding whether the execution of the inter-terminal direct communication by the radio terminal apparatus outside of the communicable area is possible.
(7) A radio terminal apparatus of the present invention is a radio terminal apparatus of a radio communication system in which communication is possible between radio terminal apparatuses via a radio base station apparatus, the radio terminal apparatus including: an inter-terminal direct communication control unit which controls inter-terminal direct communication which is direct communication between the radio terminal apparatuses, and the inter-terminal direct communication control unit determines whether to execute the inter-terminal direct communication based on information transmitted from the radio base station apparatus and indicating whether execution of the inter-terminal direct communication is possible.
(8) In the radio terminal apparatus described in the foregoing (7), when the radio terminal apparatus is inside a communicable area of the radio base station apparatus, the inter-terminal direct communication control unit may incorporate attribute information of the inter-terminal direct communication by the radio terminal apparatus into an inter-terminal direct communication request and transmit the inter-terminal direct communication request to the radio base station apparatus, and may receive the information indicating whether the execution of the inter-terminal direct communication is possible from the radio base station apparatus as a response to the inter-terminal direct communication request.
(9) The radio terminal apparatus described in the foregoing (7) may further include a radio unit which measures radio resources for inter-terminal direct communication used for the inter-terminal direct communication, and when the radio terminal apparatus is inside a communicable area of the radio base station apparatus, the inter-terminal direct communication control unit may incorporate attribute information of the inter-terminal direct communication by a radio terminal apparatus outside of the communicable area of the radio base station apparatus into inter-terminal direct communication detection signaling and transmit the inter-terminal direct communication detection signaling to the radio base station apparatus based on a measurement result of the radio resources for inter-terminal direct communication, and the inter-terminal direct communication control unit may receive information indicating whether the execution of the inter-terminal direct communication by the radio terminal apparatus outside of the communicable area is possible from the radio base station apparatus as a response to the inter-terminal direct communication detection signaling and transmits the received information indicating whether the execution of the inter-terminal direct communication is possible to the radio terminal apparatus outside of the communicable area.
(10) In the radio terminal apparatus described in the foregoing (9), when the radio terminal apparatus is outside of the communicable area of the radio base station apparatus, the inter-terminal direct communication control unit may determine whether to execute the inter-terminal direct communication based on the information indicating whether the execution of the inter-terminal direct communication is possible and received from the radio terminal apparatus inside the communicable area of the radio base station apparatus.
(11) A radio communication system of the present invention is a radio communication system including: the radio base station apparatus described in the foregoing (1); and the radio terminal apparatus described in the foregoing (7).
(12) A radio base station apparatus of the present invention is a radio base station apparatus of a radio communication system in which communication is possible between radio terminal apparatuses via the radio base station apparatus, the radio base station apparatus including: an inter-terminal direct communication permission condition storage unit which stores information regarding a permission condition of inter-terminal direct communication which is direct communication between the radio terminal apparatuses; and a radio unit which transmits the information regarding the permission condition to the radio terminal apparatus.
(13) A radio terminal apparatus of the present invention is a radio terminal apparatus of a radio communication system in which communication is possible between radio terminal apparatuses via a radio base station apparatus, the radio terminal apparatus including: a radio unit which receives information regarding a permission condition of inter-terminal direct communication which is direct communication between the radio terminal apparatuses from the radio base station apparatus; an inter-terminal direct communication information storage unit which stores the received information regarding the permission condition; and an inter-terminal direct communication control unit which controls the inter-terminal direct communication based on the permission condition.
(14) In the radio terminal apparatus described in the foregoing (13), when the radio terminal apparatus is inside a communicable area of the radio base station apparatus, the inter-terminal direct communication control unit may determine whether execution of the inter-terminal direct communication is possible based on the permission condition and attribute information of the inter-terminal direct communication by the radio terminal apparatus.
(15) In the radio terminal apparatus described in the foregoing (13), the radio unit may measure radio resources for inter-terminal direct communication used for the inter-terminal direct communication, the inter-terminal direct communication control unit may determine whether the execution of the inter-terminal direct communication is possible based on the permission condition and the attribute information of the inter-terminal direct communication when the radio terminal apparatus is inside the communicable area of the radio base station apparatus and the inter-terminal direct communication by a radio terminal apparatus outside of the communicable area of the radio base station apparatus is detected based on a measurement result of the radio resources for inter-terminal direct communication, and the inter-terminal direct communication control unit may transmit information indicating whether the execution of the inter-terminal direct communication is possible to the radio terminal apparatus outside of the communicable area based on a determination result.
(16) In the radio terminal apparatus described in the foregoing (15), when the radio terminal apparatus is outside of the communicable area of the radio base station apparatus, the inter-terminal direct communication control unit may determine whether to execute the inter-terminal direct communication based on the information indicating whether the execution of the inter-terminal direct communication is possible received from the radio terminal apparatus inside the communicable area of the radio base station apparatus.
(17) A radio communication system of the present invention is a radio communication system including: the radio base station apparatus described in the foregoing (12); and the radio terminal apparatus described in the foregoing (13).
(18) An inter-terminal direct communication control method of the present invention is an inter-terminal direct communication control method in a radio base station apparatus of a radio communication system in which communication is possible between radio terminal apparatuses via the radio base station apparatus, the method including: a step of storing, by the radio base station apparatus, information regarding a permission condition of inter-terminal direct communication which is direct communication between the radio terminal apparatuses in an inter-terminal direct communication permission condition storage unit; and a step of controlling, by the radio base station apparatus, execution of the inter-terminal direct communication based on the permission condition.
(19) An inter-terminal direct communication control method of the present invention is an inter-terminal direct communication control method in a radio terminal apparatus of a radio communication system in which communication is possible between radio terminal apparatuses via a radio base station apparatus, the method including: an inter-terminal direct communication control step of controlling, by the radio terminal apparatus, inter-terminal direct communication which is direct communication between the radio terminal apparatuses, and, in the inter-terminal direct communication control step, whether to execute the inter-terminal direct communication is determined based on information transmitted from the radio base station apparatus and indicating whether execution of the inter-terminal direct communication is possible.
(20) An inter-terminal direct communication control method of the present invention is an inter-terminal direct communication control method in a radio base station apparatus of a radio communication system in which communication is possible between radio terminal apparatuses via the radio base station apparatus, the method including: a step of storing, by the radio base station apparatus, information regarding a permission condition of inter-terminal direct communication which is direct communication between the radio terminal apparatuses in an inter-terminal direct communication permission condition storage unit; and a step of transmitting, by the radio base station apparatus, the information regarding the permission condition to a radio terminal apparatus.
(21) An inter-terminal direct communication control method of the present invention is an inter-terminal direct communication control method in a radio terminal apparatus of a radio communication system in which communication is possible between radio terminal apparatuses via a radio base station apparatus, the method including: a step of receiving, by the radio terminal apparatus, information regarding a permission condition of inter-terminal direct communication which is direct communication between the radio terminal apparatuses from the radio base station apparatus; a step of storing, by the radio terminal apparatus, the received information regarding the permission condition in an inter-terminal direct communication information storage unit; and a step of controlling, by the radio terminal apparatus, the inter-terminal direct communication based on the permission condition.
(22) A computer program of the present invention is a computer program causing a computer of a radio base station apparatus of a radio communication system in which communication is possible between radio terminal apparatuses via the radio base station apparatus to execute: a step of storing information regarding a permission condition of inter-terminal direct communication which is direct communication between the radio terminal apparatuses in an inter-terminal direct communication permission condition storage unit; and a step of controlling execution of the inter-terminal direct communication based on the permission condition.
(23) A computer program of the present invention is a computer program causing a computer of a radio terminal apparatus of a radio communication system in which communication is possible between radio terminal apparatuses via a radio base station apparatus to execute: an inter-terminal direct communication control step of controlling inter-terminal direct communication which is direct communication between the radio terminal apparatuses, and, in the inter-terminal direct communication control step, whether to execute the inter-terminal direct communication is determined based on information transmitted from the radio base station apparatus and indicating whether execution of the inter-terminal direct communication is possible.
(24) A computer program of the present invention is a computer program causing a computer of a radio base station apparatus of a radio communication system in which communication is possible between radio terminal apparatuses via the radio base station apparatus to execute: a step of storing information regarding a permission condition of inter-terminal direct communication which is direct communication between the radio terminal apparatuses in an inter-terminal direct communication permission condition storage unit; and a step of transmitting the information regarding the permission condition to a radio terminal apparatus.
(25) A computer program of the present invention is a computer program causing a computer of a radio terminal apparatus of a radio communication system in which communication is possible between radio terminal apparatuses via a radio base station apparatus to execute: a step of receiving information regarding a permission condition of inter-terminal direct communication which is direct communication between the radio terminal apparatuses from the radio base station apparatus; a step of storing the received information regarding the permission condition in an inter-terminal direct communication information storage unit; and a step of controlling the inter-terminal direct communication based on the permission condition.

### Advantageous Effects of the Invention

The present invention has the advantageous effect in that terminals executing inter-terminal direct communication can be managed.

### BRIEF DESCRIPTION OF DRAWINGS

FIG. 1 is a schematic configuration diagram for describing the configuration of a radio communication system in accordance with an embodiment of the present invention.
FIG. 2 is a block diagram illustrating the configuration of a base station 1 in accordance with the embodiment of the present invention.
FIG. 3 is a block diagram illustrating the configuration of a terminal 2 in accordance with the embodiment of the present invention.
FIG. 4 is a flowchart of an inter-terminal direct communication control process of the base station 1 in accordance with Example 1 of the present invention.
FIG. 5 is a flowchart of the inter-terminal direct communication control process of the terminal 2 in accordance with Example 1 of the present invention.
FIG. 6 is a flowchart of the inter-terminal direct communication control process of the terminal 2 in accordance with Example 1 of the present invention.
FIG. 7 is a flowchart of an inter-terminal direct communication control process of the base station 1 in accordance with Example 2 of the present invention.
FIG. 8 is a flowchart of the inter-terminal direct communication control process of the terminal 2 in accordance with Example 2 of the present invention.
FIG. 9 is a flowchart of the inter-terminal direct communication control process of the terminal 2 in accordance with Example 2 of the present invention.
FIG. 10 is a sequence chart illustrating a procedure of an inter-terminal direct communication control method in accordance with Example 3 of the present invention.
FIG. 11 is a sequence chart illustrating a procedure of the inter-terminal direct communication control method in accordance with Example 3 of the present invention.

### MODES FOR CARRYING OUT THE INVENTION

Hereinafter, an embodiment of the present invention will be described with reference to the drawings.

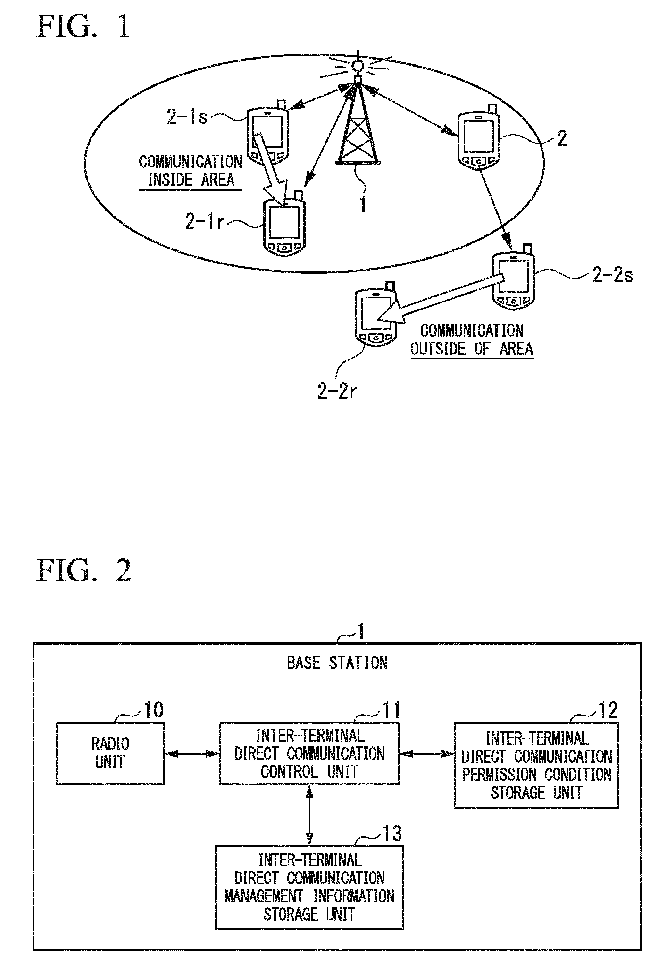

FIG. 1 is a schematic configuration diagram for describing the configuration of a radio communication system in accordance with an embodiment of the present invention. In the radio communication system in accordance with the present embodiment, communication is possible between radio terminal apparatuses (hereinafter referred to as terminals) via a radio base station apparatus (hereinafter referred to as a base station). As the radio communication system in accordance with the present embodiment, for example, there is a cellular system.

FIG. 1 illustrates a base station 1, and a transmission-end terminal 2-1s and a reception-end terminal 2-1r executing inter-terminal direct communication inside a communicable area in which the terminals can execute communication with the base station 1. FIG. 1 also illustrates a transmission-end terminal 2-2s and a reception-end terminal 2-2r executing inter-terminal direct communication outside the communicable area in which the terminals can execute communication with the base station 1. Hereinafter, when the terminals 2-1s, 2-1r, 2-2s, and 2-2r are not particularly distinguished from each other, the terminals 2-1s, 2-1r, 2-2s, and 2-2r are referred to as "terminals 2".

In FIG. 1, the terminals 2 inside the communicable area of the base station 1 can directly transmit and receive data to and from the base station 1. In contrast, the terminals 2 outside of the communicable area of the base station 1 cannot directly transmit and receive data to and from the base station 1. The terminals 2 outside of the communicable area of the base station 1 can receive signals transmitted from the terminals 2 inside the communicable area of the base station 1. Moreover, the terminals 2 inside the communicable area of the base station 1 can receive signals transmitted from the terminals 2 outside of the communicable area of the base station 1.

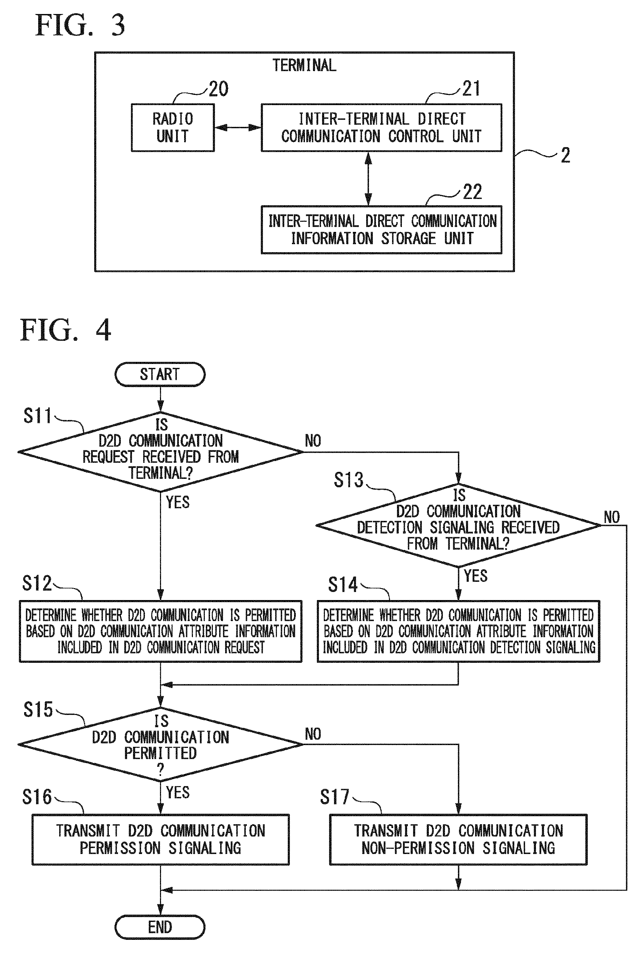

FIG. 2 is a block diagram illustrating the configuration of the base station 1 in accordance with the present embodiment. FIG. 3 is a block diagram illustrating the configuration of the terminal 2 in accordance with the present embodiment. FIGS. 2 and 3 illustrate only the configurations related to the inter-terminal direct communication.

In FIG. 2, the base station 1 includes a radio unit 10, an inter-terminal direct communication control unit 11, an inter-terminal direct communication permission condition storage unit 12, and an inter-terminal direct communication management information storage unit 13. The radio unit 10 executes radio communication with the terminals 2 inside the communicable area of the base station 1. The inter-terminal direct communication control unit 11 controls the inter-terminal direct communication. The inter-terminal direct communication permission condition storage unit 12 stores information of a permission condition of the inter-terminal direct communication (inter-terminal direct communication permission condition information). The inter-terminal direct communication management information storage unit 13 stores management information regarding the inter-terminal direct communication.

First to fourth examples of permission conditions of the inter-terminal direct communication are as follows.

(First example) A frequency band used for the inter-terminal direct communication is a defined frequency band.
(Second example) A category of the terminals executing the inter-terminal direct communication is a defined category.
(Third example) Transmission power used for the inter-terminal direct communication is less than or equal to defined transmission power.
(Fourth example) A service type of inter-terminal direct communication is a defined service type. As the service type, for example, there is a class of a QoS Class Indicator (QCI). The QCI is described in Non Patent Literature 2.

The first to fourth examples of the permission conditions of the inter-terminal direct communication described above may be independently used or a plurality of the examples may be used in combination.

In FIG. 3, the terminal 2 includes a radio unit 20, an inter-terminal direct communication control unit 21, and an inter-terminal direct communication information storage unit 22. The radio unit 20 executes radio communication with the base station 1. Moreover, the radio unit 20 executes radio communication with a counterpart of the inter-terminal direct communication. Furthermore, when the terminal 2 is inside the communicable area of the base station 1, the radio unit 20 receives a signal transmitted from the terminal 2 outside of the communicable area of the base station 1 or transmits a signal toward the terminal 2 outside of the communicable area of the base station 1. Additionally, when the terminal 2 is outside of the communicable area of the base station 1, the radio unit 20 receives a signal transmitted from the terminal 2 inside the communicable area of the base station 1.

The inter-terminal direct communication control unit 21 controls the inter-terminal direct communication. The inter-terminal direct communication information storage unit 22 stores information regarding the inter-terminal direct communication.

Next, an inter-terminal direct communication control scheme in accordance with the present embodiment will be described in accordance with Examples. In the following description, the inter-terminal direct communication is referred to as D2D communication in some cases.

### Example 1

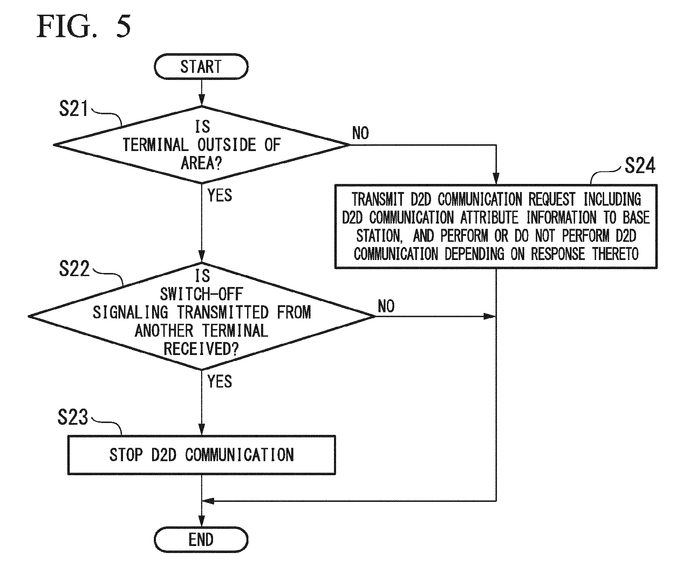

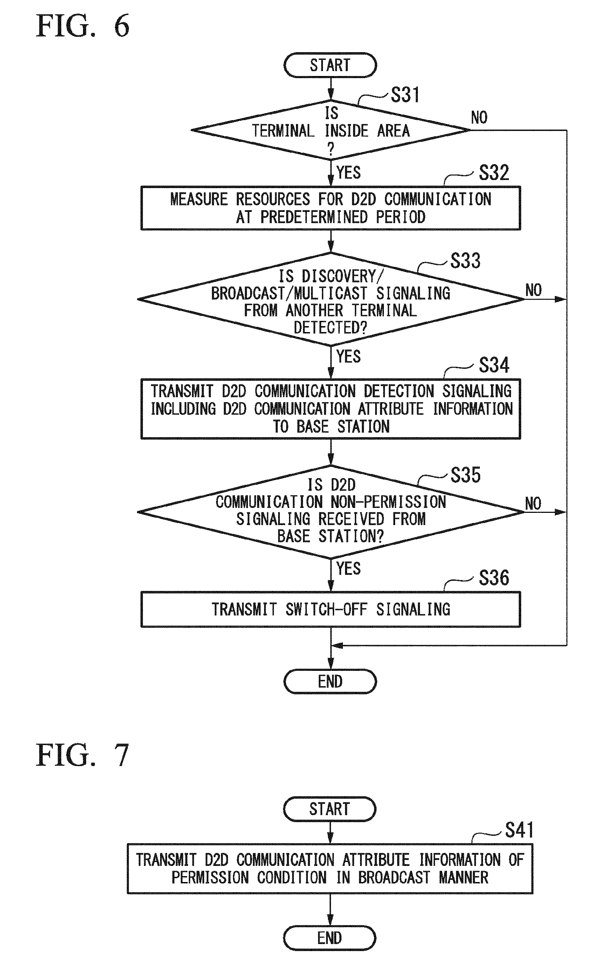

In Example 1, the base station 1 controls the inter-terminal direct communication in a centralized manner. FIG. 4 is a flowchart of an inter-terminal direct communication control process of the base station 1 in accordance with Example 1 of the present invention. FIGS. 5 and 6 are flowcharts of the inter-terminal direct communication control process of the terminal 2 in accordance with Example 1 of the present invention.

First, an operation of the inter-terminal direct communication control unit 11 of the base station 1 will be described with reference to FIG. 4. The inter-terminal direct communication control process in FIG. 4 is executed periodically or at a predetermined timing (e.g., a reception timing from the terminal 2).

(Step S11) The inter-terminal direct communication control unit 11 determines whether the radio unit 10 receives a D2D communication request from the terminal 2. If a determination result indicates that the D2D communication request is received, the process proceeds to step S12. If the determination result indicates that the D2D communication request is not received, the process proceeds to step S13.

(Step S12) Based on D2D communication attribute information included in the received D2D communication request, the inter-terminal direct communication control unit 11 determines whether the D2D communication is permitted. In this determination, "permission" is determined when the D2D communication attribute information included in the D2D communication request satisfies a permission condition of the D2D communication indicated by the inter-terminal direct communication permission condition information stored in the inter-terminal direct communication permission condition storage unit 12. "Non-permission" is determined when the D2D communication attribute information does not satisfy the permission condition.

(Step S13) The inter-terminal direct communication control unit 11 determines whether the radio unit 10 receives D2D communication detection signaling from the terminal 2. If a determination result indicates that the D2D communication detection signaling is received, the process proceeds to step S14. If the determination result indicates that the D2D communication detection signaling is not received, the process of FIG. 4 ends.

(Step S14) Based on the D2D communication attribute information included in the received D2D communication detection signaling, the inter-terminal direct communication control unit 11 determines whether the D2D communication is permitted. In this determination, "permission" is determined when the D2D communication attribute information included in the D2D communication detection signaling satisfies a permission condition of the D2D communication indicated by the inter-terminal direct communication permission condition information stored in the inter-terminal direct communication permission condition storage unit 12. "Non-permission" is determined when the D2D communication attribute information does not satisfy the permission condition.

(Step S 15) If determination result in step S12 or step S 14 indicates that the D2D communication is permitted, the process proceeds to step S16. If the D2D communication is not permitted, the process proceeds to step S17.

(Step S16) The inter-terminal direct communication control unit 11 causes the radio unit 10 to transmit D2D communication permission signaling as a response to the D2D communication request or the D2D communication detection signaling. As the D2D communication permission signaling, for example, there is an Ack signal.

(Step S17) The inter-terminal direct communication control unit 11 causes the radio unit 10 to transmit D2D communication non-permission signaling as a response to the D2D communication request or the D2D communication detection signaling. As the D2D communication non-permission signaling, for example, there is a Nack signal.

The inter-terminal direct communication control unit 11 stores information regarding the terminal 2 for which the D2D communication is permitted and information regarding the terminal 2 for which the D2D communication is not permitted in the inter-terminal direct communication management information storage unit 13. As the information regarding the terminal 2 stored in the inter-terminal direct communication management information storage unit 13, there is identification information and D2D communication attribute information regarding the terminal 2.

Next, an operation of the inter-terminal direct communication control unit 21 of the terminal 2 will be described with reference to FIGS. 5 and 6. The inter-terminal direct communication control process in FIGS. 5 and 6 is executed periodically or at a predetermined timing (e.g., a reception timing from the base station 1 or another terminal 2).

First, the inter-terminal direct communication control process of the terminal 2 related to FIG. 5 will be described.

(Step S21) The inter-terminal direct communication control unit 21 causes the radio unit 20 to determine whether the terminal 2 is inside or outside of the communicable area of the base station 1. If the result indicates that the terminal 2 is outside of the communicable area of the base station 1, the process proceeds to step S22. If the result indicates that the terminal 2 is inside the communicable area of the base station 1, the process proceeds to step S24.

(Step S22) The inter-terminal direct communication control unit 21 determines whether the radio unit 20 receives "switch-off signaling" transmitted from another terminal 2. The "switch-off signaling" indicates that the D2D communication is not permitted. The "switch-off signaling" is transmitted from the terminal 2 inside the communicable area of the base station 1. If a determination result indicates that the "switch-off signaling" is received, the process proceeds to step S23. If the determination result indicates that the "switch-off signaling" is not received, the process of FIG. 5 ends.

(Step S23) When the "switch-off signaling" is received, the inter-terminal direct communication control unit 21 stops the D2D communication. As a result, the D2D communication executed in the terminal 2 outside of the communicable area of the base station 1 is stopped.

(Step S24) The inter-terminal direct communication control unit 21 transmits a D2D communication request including the D2D communication attribute information to the base station 1 and determines whether to execute the D2D communication in accordance with a response thereto. The D2D communication attribute information is attribute information of the D2D communication of the terminal 2.

First to fourth examples of the D2D communication attribute information are as follows.

(First example) Information indicating a frequency band used for the D2D communication.
(Second example) Information indicating a category of the terminal executing the D2D communication.
(Third example) Information indicating transmission power used for the D2D communication.
(Fourth example) Information indicating a service type of the D2D communication. As the service type, for example, there is a class of a QCI.

The first to fourth examples of the attribute information of the D2D communication described above may be independently used or a plurality of the examples may be used in combination.

Next, the inter-terminal direct communication control process of the terminal 2 related to FIG. 6 will be described.

(Step S31) The inter-terminal direct communication control unit 21 causes the radio unit 20 to determine whether the terminal 2 is inside or outside of the communicable area of the base station 1. If the result indicates that the terminal 2 is inside the communicable area of the base station 1, the process proceeds to step S32. If the result indicates that the terminal 2 is outside of the communicable area of the base station 1, the process of FIG. 6 ends.

(Step S32) The inter-terminal direct communication control unit 21 causes the radio unit 20 to measure radio resources for D2D communication used for the D2D communication at a predetermined period.

(Step S33) Based on the measurement result of the radio resources for D2D communication, the inter-terminal direct communication control unit 21 determines whether the D2D communication by the terminal 2 outside of the communicable area of the base station 1 is detected. In the detection determination, it is determined whether any one type of signaling among "Discovery", "Broadcast", and "Multicast" related to the D2D communication is detected. If a determination result indicates that any one type of signaling is detected, the process proceeds to step S34. If no signaling is detected, the process of FIG. 6 ends.

(Step S34) Based on the measurement result of the radio resources for D2D communication, the inter-terminal direct communication control unit 21 incorporates the attribute information of the D2D communication by the terminal 2 outside of the communicable area of the base station 1 into the D2D communication detection signaling and causes the radio unit 20 to transmit the D2D communication detection signaling to the base station 1.

(Step S35) The inter-terminal direct communication control unit 21 causes the radio unit 20 to determine whether the D2D communication non-permission signaling is received from the base station 1 as a response to the D2D communication detection signaling. If a determination result indicates that the D2D communication non-permission signaling is received, the process proceeds to step S36. If the determination result indicates that the D2D communication non-permission signaling is not received, the process of FIG. 6 ends.

(Step S36) When the D2D communication non-permission signaling is received, the inter-terminal direct communication control unit 21 transmits the "switch-off signaling" to the relevant terminal 2 outside of the communicable area of the base station 1. As a result, the "switch-off signaling" is received in the relevant terminal 2 outside of the communicable area of the base station 1, and thus the D2D communication of the relevant terminal 2 outside of the communicable area is stopped.

It is to be noted that the inter-terminal direct communication control unit 21 may confirm whether the D2D communication is stopped in the relevant terminal 2 by receiving a response (Ack/Nack) to the "switch-off signaling" transmitted in step S36.

In accordance with the present Example 1, the base station 1 can control the execution of the D2D communication executed with the terminal 2 inside the communicable area of the base station 1 and the D2D communication executed with the terminal 2 outside of the communicable area of the base station 1 in a centralized manner. As a result, it is possible to obtain the advantageous effect in that the terminals executing the D2D communication can be managed. For example, an operator can comprehend, for example, the terminal 2 for which the D2D communication is permitted and the terminal 2 for which the D2D communication is not permitted.

Moreover, it is possible to detect D2D communication executed autonomously with the terminal 2 outside of the communicable area of the base station 1 and control the execution of the D2D communication.

### Example 2

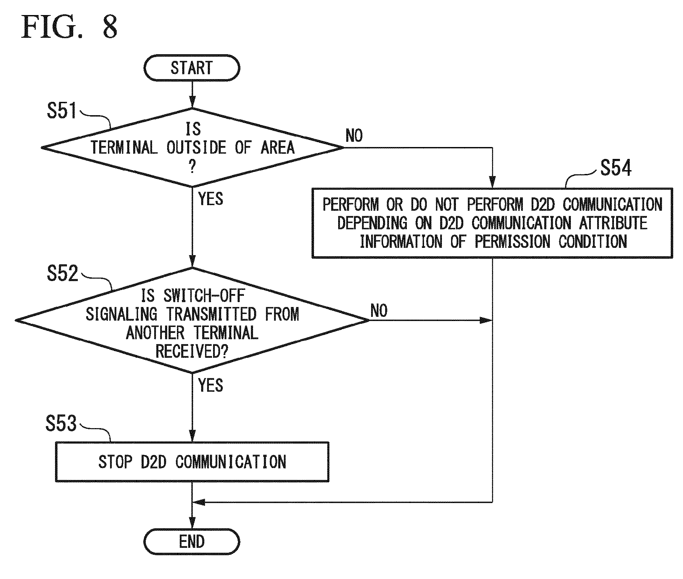

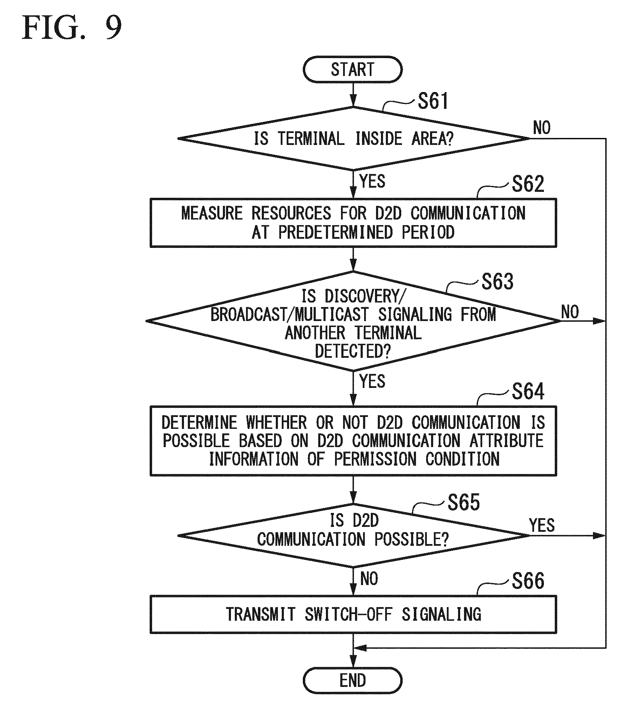

In Example 2, each terminal 2 inside the communicable area of the base station 1 controls the inter-terminal direct communication in a distributed manner. FIG. 7 is a flowchart of an inter-terminal direct communication control process of the base station 1 in accordance with Example 2 of the present invention. FIGS. 8 and 9 are flowcharts of the inter-terminal direct communication control process of the terminal 2 in accordance with Example 2 of the present invention.

First, an operation of the inter-terminal direct communication control unit 11 of the base station 1 will be described with reference to FIG. 7. The inter-terminal direct communication control process in FIG. 7 is executed periodically or at a predetermined timing (e.g., a transmission timing from the base station 1).

(Step S41) The inter-terminal direct communication control unit 11 causes the radio unit 10 to transmit the D2D communication attribute information of the D2D communication permission condition in a broadcast manner. The D2D communication attribute information of the D2D communication permission condition is indicated by the inter-terminal direct communication permission condition information stored in the inter-terminal direct communication permission condition storage unit 12.

The D2D communication attribute information of the D2D communication permission condition transmitted from the base station 1 in the broadcast manner is received by each terminal 2 inside the communicable area of the base station 1. Each terminal 2 stores the received D2D communication attribute information of the D2D communication permission condition in the inter-terminal direct communication information storage unit 22.

Next, an operation of the inter-terminal direct communication control unit 21 of the terminal 2 will be described with reference to FIGS. 8 and 9. The inter-terminal direct communication control process in FIGS. 8 and 9 is executed periodically or at a predetermined timing (e.g., a reception timing from the base station 1 or another terminal 2).

First, the inter-terminal direct communication control process of the terminal 2 related to FIG. 8 will be described.

(Step S51) The inter-terminal direct communication control unit 21 causes the radio unit 20 to determine whether the terminal 2 is inside or outside of the communicable area of the base station 1. If the result indicates that the terminal 2 is outside of the communicable area of the base station 1, the process proceeds to step S52. If the result indicates that the terminal 2 is inside the communicable area of the base station 1, the process proceeds to step S54.

(Step S52) The inter-terminal direct communication control unit 21 determines whether the radio unit 20 receives "switch-off signaling" transmitted from another terminal 2. The "switch-off signaling" indicates that the D2D communication is not permitted. The "switch-off signaling" is transmitted from the terminal 2 inside the communicable area of the base station 1. If a determination result indicates that the "switch-off signaling" is received, the process proceeds to step S53. If the determination result indicates that the "switch-off signaling" is not received, the process of FIG. 8 ends.

(Step S53) When the "switch-off signaling" is received, the inter-terminal direct communication control unit 21 stops the D2D communication. As a result, the D2D communication executed in the terminal 2 outside of the communicable area of the base station 1 is stopped.

(Step S54) The inter-terminal direct communication control unit 21 determines whether to execute the D2D communication in accordance with the D2D communication attribute information of the D2D communication permission condition stored in the inter-terminal direct communication information storage unit 22. In this determination, it is determined that the D2D communication is be executed if the D2D communication attribute information of the terminal 2 agrees with the D2D communication attribute information of the D2D communication permission condition stored in the inter-terminal direct communication information storage unit 22, and it is determined that the D2D communication is not to be executed if the D2D communication attribute information of the terminal 2 does not agree with the D2D communication attribute information of the D2D communication permission condition stored in the inter-terminal direct communication information storage unit 22. The inter-terminal direct communication control unit 11 controls the execution of the D2D communication of the terminal in accordance with the determination result.

Next, the inter-terminal direct communication control process of the terminal 2 related to FIG. 9 will be described.

(Step S61) The inter-terminal direct communication control unit 21 causes the radio unit 20 to determine whether the terminal 2 is inside or outside of the communicable area of the base station 1. If a determination result indicates that the terminal 2 is inside the communicable area of the base station 1, the process proceeds to step S62. If the determination result indicates that the terminal 2 is outside of the communicable area of the base station 1, the process of FIG. 9 ends.

(Step S62) The inter-terminal direct communication control unit 21 causes the radio unit 20 to measure radio resources for D2D communication used for the D2D communication at a predetermined period.

(Step S63) Based on the measurement result of the radio resources for D2D communication, the inter-terminal direct communication control unit 21 determines whether the D2D communication by the terminal 2 outside of the communicable area of the base station 1 is detected. In the detection determination, it is determined whether any one type of signaling among "Discovery", "Broadcast", and "Multicast" related to the D2D communication is detected. If a determination result indicates that any one type of signaling is detected, the process proceeds to step S64. If no signaling is detected, the process of FIG. 9 ends.

(Step S64) The inter-terminal direct communication control unit 21 determines whether execution of the D2D communication by the terminal 2 outside of the communicable area of the base station 1 is possible in accordance with the D2D communication attribute information of the D2D communication permission condition stored in the inter-terminal direct communication information storage unit 22. In this determination, based on the measurement result of the radio resources for D2D communication, it is determined that execution of the D2D communication is possible if the D2D communication attribute information by the terminal 2 outside of the communicable area of the base station 1 agrees with the D2D communication attribute information of the D2D communication permission condition stored in the inter-terminal direct communication information storage unit 22, and it is determined that execution of the D2D communication is not possible if the D2D communication attribute information by the terminal 2 outside of the communicable area of the base station 1 does not agree with the D2D communication attribute information of the D2D communication permission condition stored in the inter-terminal direct communication information storage unit 22.

(Step S65) If the determination result in step S64 indicates that execution of the D2D communication is possible, the process of FIG. 9 ends. If execution of the D2D communication is not possible, the process proceeds to step S66.

(Step S66) As a result of the determination that execution of the D2D communication is not possible, the inter-terminal direct communication control unit 21 transmits the "switch-off signaling" to the relevant terminal 2 outside of the communicable area of the base station 1. As a result, the "switch-off signaling" is received in the relevant terminal 2 outside of the communicable area of the base station 1, and thus the D2D communication of the terminal 2 outside of the communicable area is stopped.

It is to be noted that the inter-terminal direct communication control unit 21 may confirm whether the D2D communication is stopped in the relevant terminal 2 by receiving a response (Ack/Nack) to the "switch-off signaling" transmitted in step S66.

In accordance with the present Example 2, the terminal 2 inside the communicable area of the base station 1 can control the execution of the D2D communication executed with the terminal 2 inside the communicable area of the base station 1 and the D2D communication executed with the terminal 2 outside of the communicable area of the base station 1 in the distributed manner. As a result, it is possible to obtain the advantageous effect in that the terminals executing the D2D communication can be managed.

Furthermore, it is possible to detect D2D communication executed autonomously with the terminal 2 outside of the communicable area of the base station 1 and control execution of the D2D communication.

It is to be noted that each terminal 2 inside the communicable area of the base station 1 may report a result of control of the execution of the D2D communication (whether execution of the D2D communication is possible) to the base station 1 and the base station 1 may store the reported content in the inter-terminal direct communication management information storage unit 13. As a result, an operator can comprehend, for example, the terminal 2 for which the D2D communication is permitted and the terminal 2 for which the D2D communication is not permitted.

### Example 3

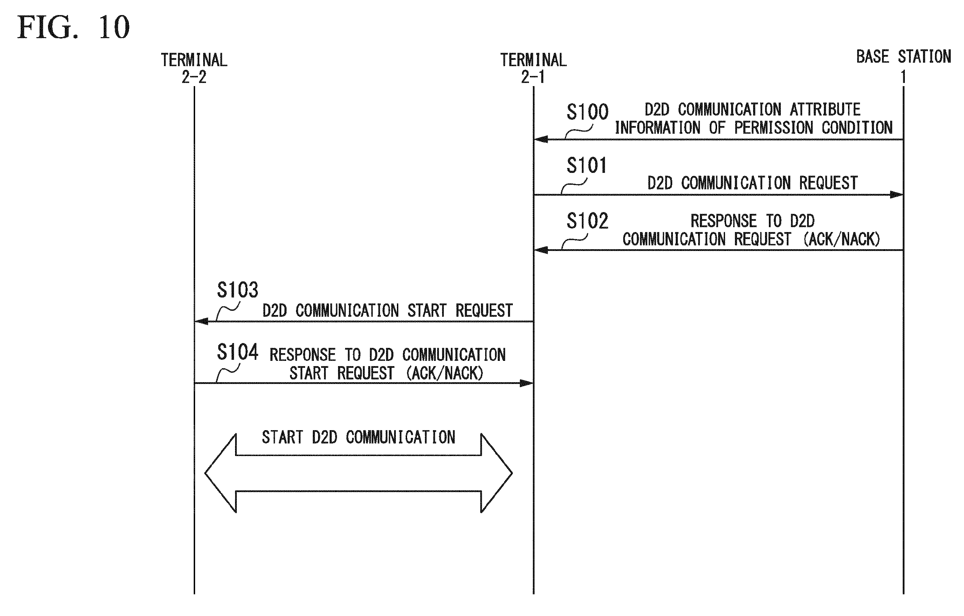

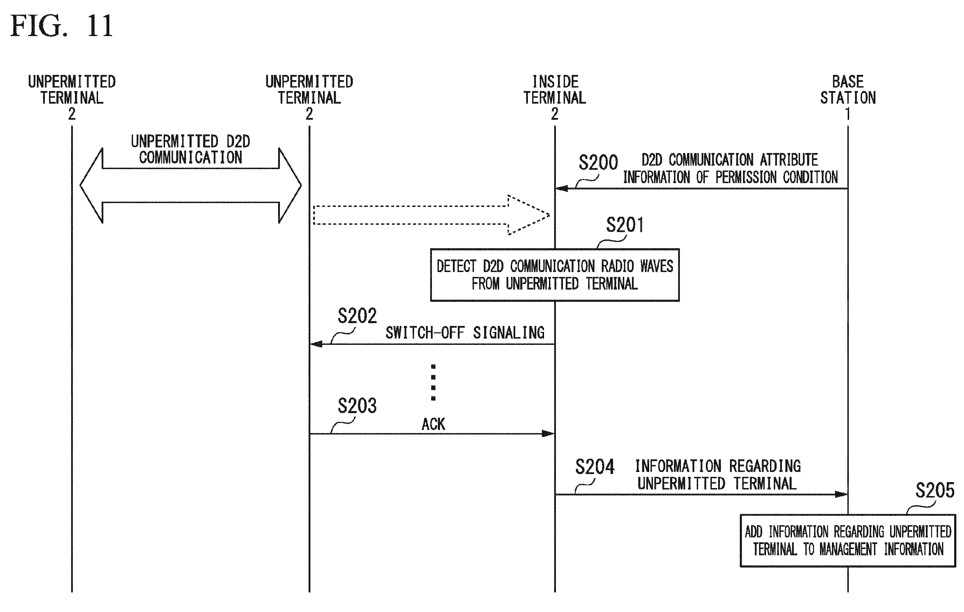

FIGS. 10 and 11 are sequence charts illustrating a procedure of an inter-terminal direct communication control method in accordance with Example 3 of the present invention.

First, the inter-terminal direct communication control method in FIG. 10 will be described.

(Step S100) The base station 1 transmits the D2D communication attribute information of the D2D communication permission condition to the terminal 2-1 inside the communicable area of the base station 1. The D2D communication attribute information of the D2D communication permission condition is indicated by the inter-terminal direct communication permission condition information stored in the inter-terminal direct communication permission condition storage unit 12. The terminal 2-1 stores the received D2D communication attribute information of the D2D communication permission condition in the inter-terminal direct communication information storage unit 22.

(Step S101) The terminal 2-1 transmits the D2D communication request including the D2D communication attribute information between the terminals 2-1 and 2-2 to the base station 1.

(Step S102) The base station 1 determines whether to permit the D2D communication based on the D2D communication attribute information included in the D2D communication request received from the terminal 2-1. In this determination, "permission" is determined if the D2D communication attribute information included in the D2D communication request satisfies a permission condition of the D2D communication indicated by the inter-terminal direct communication permission condition information stored in the inter-terminal direct communication permission condition storage unit 12, and "Non-permission" is determined if the D2D communication attribute information does not satisfy the permission condition. If the determination result indicates "permission", the base station 1 replies to the terminal 2-1 with a D2D communication request response "Ack". In contrast, if the determination result indicates "non-permission", the base station 1 replies to the terminal 2-1 with a D2D communication request response "Nack".

(Step S103) If the terminal 2-1 receives the D2D communication request response "Ack" from the base station 1, the terminal 2-1 transmits a D2D communication start request to the terminal 2-2. In contrast, if the terminal 2-1 receives a D2D communication request response "Nack" from the base station 1, the terminal 2-1 does not execute the D2D communication with the terminal 2-2.

(Step S104) The terminal 2-2 replies to the terminal 2-1 with a response (Ack or Nack) to the D2D communication start request received from the terminal 2-1.

(Step S105) If the terminal 2-1 receives the D2D communication start request response "Ack" from the terminal 2-2, the terminal 2-1 starts the D2D communication with the terminal 2-2. In contrast, if the terminal 2-1 receives the D2D communication start request response "Nack" from the terminal 2-2, the terminal 2-1 does not execute the D2D communication with the terminal 2-2.

Next, the inter-terminal direct communication control method in FIG. 11 will be described. In the example of FIG. 11, there are terminals (unpermitted terminals) 2 executing unpermitted D2D communication.

(Step S200) The base station 1 transmits the D2D communication attribute information of the D2D communication permission condition to the terminal (the inside terminal) 2 inside the communicable area of the base station 1. The D2D communication attribute information of the D2D communication permission condition is indicated by the inter-terminal direct communication permission condition information stored in the inter-terminal direct communication permission condition storage unit 12. The inside terminal 2 stores the received D2D communication attribute information of the D2D communication permission condition in the inter-terminal direct communication information storage unit 22.

(Step S201) The inside terminal 2 detects D2D communication radio waves from an unpermitted terminal 2 by measuring radio resources for D2D communication. In response to this detection, the inside terminal 2 determines that the D2D communication is not permitted based on a measurement result of the radio resources for D2D communication if the measured D2D communication attribute information does not agree with the D2D communication attribute information of the D2D communication permission condition stored in the inter-terminal direct communication information storage unit 22.

(Step S202) The inside terminal 2 transmits the "switch-off signaling" to the unpermitted terminal 2. The "switch-off signaling" is repeatedly transmitted to the unpermitted terminal 2 until the response "Ack" to the "switch-off signaling" from the unpermitted terminal 2 is replied or until a predetermined period elapses from the start of the transmission of the "switch-off signaling".

(Step S203) The inside terminal 2 receives the response "Ack" to the "switch-off signaling" from the unpermitted terminal 2. As a result, the inside terminal 2 confirms that the D2D communication by the unpermitted terminal 2 is stopped.

(Step S204) The inside terminal 2 transmits information regarding the unpermitted terminal 2 (terminal identification information, D2D communication attribute information, or the like) to the base station 1.

(Step S205) The base station 1 stores the information regarding the unpermitted terminal 2 received from the inside terminal 2 in the inter-terminal direct communication management information storage unit 13. As a result, the operator can comprehend the information regarding the unpermitted terminal 2.

Although the embodiment and Examples of the present invention have been described in detail with reference to the drawings, the specific configurations are not limited to the embodiment and Examples, and changed designs or the like that do not depart from the gist of the present invention are also included.

It is to be noted that the present invention can be applied to a radio communication system such as a cellular system. For example, the present invention can be applied to a radio communication system of the LTE standard (LTE system), a radio communication system of an LTE advanced standard (LTE advanced system), or the like.

Moreover, a computer program for realizing the base station 1 or the terminals 2 described above may be recorded on a computer-readable recording medium and the program recorded on this recording medium may be read and executed by a computer system. It is to be noted that the "computer system" mentioned herein may be a system including an operating system (OS) and hardware such as peripheral devices.

Furthermore, the "computer-readable recording medium" refers to a portable medium such as a flexible disk, a magneto-optical disc, a read-only memory (ROM), or a writable nonvolatile memory such as a flash memory, a digital versatile disk (DVD), or a storage apparatus such as a hard disk built in a computer system.

Furthermore, the "computer-readable recording medium" is assumed to also include a medium retaining a program for a given time, such as an internal volatile memory (e.g., a dynamic random access memory (DRAM)) of a computer system serving as a server or a client when the program is transmitted via a network such as the Internet or a communication circuit such as a telephone circuit.

Additionally, the program may be transmitted from a computer system storing the program in a storage device to another computer system via a transmission medium or through transmission waves in a transmission medium. Here, the "transmission medium" through which the program is transmitted refers to a medium that has a function of transmitting information, such as a network (communication network) such as the Internet or a communication circuit (communication line) such as a telephone circuit.

In addition, the program may be a program realizing part of the above-described functions. Furthermore, the program may be a so-called differential file (differential program) realizing the above-described functions in combination with a program already recorded in a computer system.

### INDUSTRIAL APPLICABILITY

The present invention can be applied to radio communication systems such as cellular systems. In accordance with the present invention, it is possible to manage terminals executing inter-terminal direct communication.

### Description of Reference Numerals

1 Base station (radio base station apparatus)
2 Terminal (radio terminal apparatus)
10 Radio unit
11 Inter-terminal direct communication control unit
12 Inter-terminal direct communication permission condition storage unit
13 Inter-terminal direct communication management information storage unit
20 Radio unit
21 Inter-terminal direct communication control unit
22 Inter-terminal direct communication information storage unit

## Claims

1. A radio base station apparatus of a radio communication system in which communication is possible between radio terminal apparatuses via the radio base station apparatus, the radio base station apparatus comprising:
an inter-terminal direct communication permission condition storage unit which stores information regarding a permission condition of inter-terminal direct communication which is direct communication between the radio terminal apparatuses; and
an inter-terminal direct communication control unit which controls execution of the inter-terminal direct communication based on the permission condition.

2. The radio base station apparatus according to claim 1, wherein the inter-terminal direct communication control unit determines whether the execution of the inter-terminal direct communication is possible based on the permission condition and inter-terminal direct communication attribute information received from a radio terminal apparatus inside a communicable area of the radio base station apparatus.

3. The radio base station apparatus according to claim 2, wherein the inter-terminal direct communication attribute information is included in an inter-terminal direct communication request from the radio terminal apparatus inside the communicable area of the radio base station apparatus and is attribute information of the inter-terminal direct communication by the radio terminal apparatus inside the communicable area.

4. The radio base station apparatus according to claim 3, wherein the inter-terminal direct communication control unit responds to the inter-terminal direct communication request regarding whether the execution of the inter-terminal direct communication by the radio terminal apparatus inside the communicable area is possible.

5. The radio base station apparatus according to claim 2, wherein the inter-terminal direct communication attribute information is included in inter-terminal direct communication detection signaling received from the radio terminal apparatus inside the communicable area of the radio base station apparatus and is attribute information of the inter-terminal direct communication by a radio terminal apparatus outside of the communicable area of the radio base station apparatus.

6. The radio base station apparatus according to claim 5, wherein the inter-terminal direct communication control unit responds to the inter-terminal direct communication detection signaling regarding whether the execution of the inter-terminal direct communication by the radio terminal apparatus outside of the communicable area is possible.

7. A radio terminal apparatus of a radio communication system in which communication is possible between radio terminal apparatuses via a radio base station apparatus, the radio terminal apparatus comprising:
an inter-terminal direct communication control unit which controls inter-terminal direct communication which is direct communication between the radio terminal apparatuses,
wherein the inter-terminal direct communication control unit determines whether to execute the inter-terminal direct communication based on information transmitted from the radio base station apparatus and indicating whether execution of the inter-terminal direct communication is possible.

8. The radio terminal apparatus according to claim 7, wherein, when the radio terminal apparatus is inside a communicable area of the radio base station apparatus, the inter-terminal direct communication control unit incorporates attribute information of the inter-terminal direct communication by the radio terminal apparatus into an inter-terminal direct communication request and transmits the inter-terminal direct communication request to the radio base station apparatus, and receives the information indicating whether the execution of the inter-terminal direct communication is possible from the radio base station apparatus as a response to the inter-terminal direct communication request.

9. The radio terminal apparatus according to claim 7, further comprising a radio unit which measures radio resources for inter-terminal direct communication used for the inter-terminal direct communication,
wherein, when the radio terminal apparatus is inside a communicable area of the radio base station apparatus, the inter-terminal direct communication control unit incorporates attribute information of the inter-terminal direct communication by a radio terminal apparatus outside of the communicable area of the radio base station apparatus into inter-terminal direct communication detection signaling and transmits the inter-terminal direct communication detection signaling to the radio base station apparatus based on a measurement result of the radio resources for inter-terminal direct communication, and
the inter-terminal direct communication control unit receives information indicating whether the execution of the inter-terminal direct communication by the radio terminal apparatus outside of the communicable area is possible from the radio base station apparatus as a response to the inter-terminal direct communication detection signaling and transmits the received information indicating whether the execution of the inter-terminal direct communication is possible to the radio terminal apparatus outside of the communicable area.

10. The radio terminal apparatus according to claim 9, wherein, when the radio terminal apparatus is outside of the communicable area of the radio base station apparatus, the inter-terminal direct communication control unit determines whether to execute the inter-terminal direct communication based on the information indicating whether the execution of the inter-terminal direct communication is possible and received from the radio terminal apparatus inside the communicable area of the radio base station apparatus.

11. A radio communication system comprising:
the radio base station apparatus according to claim 1; and
the radio terminal apparatus according to claim 7.

12. A radio base station apparatus of a radio communication system in which communication is possible between radio terminal apparatuses via the radio base station apparatus, the radio base station apparatus comprising:
an inter-terminal direct communication permission condition storage unit which stores information regarding a permission condition of inter-terminal direct communication which is direct communication between the radio terminal apparatuses; and
a radio unit which transmits the information regarding the permission condition to the radio terminal apparatus.

13. A radio terminal apparatus of a radio communication system in which communication is possible between radio terminal apparatuses via a radio base station apparatus, the radio terminal apparatus comprising:
a radio unit which receives information regarding a permission condition of inter-terminal direct communication which is direct communication between the radio terminal apparatuses from the radio base station apparatus;
an inter-terminal direct communication information storage unit which stores the received information regarding the permission condition; and
an inter-terminal direct communication control unit which controls the inter-terminal direct communication based on the permission condition.

14. The radio terminal apparatus according to claim 13, wherein, when the radio terminal apparatus is inside a communicable area of the radio base station apparatus, the inter-terminal direct communication control unit determines whether execution of the inter-terminal direct communication is possible based on the permission condition and attribute information of the inter-terminal direct communication by the radio terminal apparatus.

15. The radio terminal apparatus according to claim 13, wherein the radio unit measures radio resources for inter-terminal direct communication used for the inter-terminal direct communication,
the inter-terminal direct communication control unit determines whether the execution of the inter-terminal direct communication is possible based on the permission condition and the attribute information of the inter-terminal direct communication when the radio terminal apparatus is inside the communicable area of the radio base station apparatus and the inter-terminal direct communication by a radio terminal apparatus outside of the communicable area of the radio base station apparatus is detected based on a measurement result of the radio resources for inter-terminal direct communication, and
the inter-terminal direct communication control unit transmits information indicating whether the execution of the inter-terminal direct communication is possible to the radio terminal apparatus outside of the communicable area based on a determination result.

16. The radio terminal apparatus according to claim 15, wherein, when the radio terminal apparatus is outside of the communicable area of the radio base station apparatus, the inter-terminal direct communication control unit determines whether to execute the inter-terminal direct communication based on the information indicating whether the execution of the inter-terminal direct communication is possible received from the radio terminal apparatus inside the communicable area of the radio base station apparatus.

17. A radio communication system comprising:
the radio base station apparatus according to claim 12; and
the radio terminal apparatus according to claim 13.

18. An inter-terminal direct communication control method in a radio base station apparatus of a radio communication system in which communication is possible between radio terminal apparatuses via the radio base station apparatus, the method comprising:
a step of storing, by the radio base station apparatus, information regarding a permission condition of inter-terminal direct communication which is direct communication between the radio terminal apparatuses in an inter-terminal direct communication permission condition storage unit; and
a step of controlling, by the radio base station apparatus, execution of the inter-terminal direct communication based on the permission condition.

19. An inter-terminal direct communication control method in a radio terminal apparatus of a radio communication system in which communication is possible between radio terminal apparatuses via a radio base station apparatus, the method comprising:
an inter-terminal direct communication control step of controlling, by the radio terminal apparatus, inter-terminal direct communication which is direct communication between the radio terminal apparatuses,
wherein, in the inter-terminal direct communication control step, whether to execute the inter-terminal direct communication is determined based on information transmitted from the radio base station apparatus and indicating whether execution of the inter-terminal direct communication is possible.

20. An inter-terminal direct communication control method in a radio base station apparatus of a radio communication system in which communication is possible between radio terminal apparatuses via the radio base station apparatus, the method comprising:
a step of storing, by the radio base station apparatus, information regarding a permission condition of inter-terminal direct communication which is direct communication between the radio terminal apparatuses in an inter-terminal direct communication permission condition storage unit; and
a step of transmitting, by the radio base station apparatus, the information regarding the permission condition to a radio terminal apparatus.

21. An inter-terminal direct communication control method in a radio terminal apparatus of a radio communication system in which communication is possible between radio terminal apparatuses via a radio base station apparatus, the method comprising:
a step of receiving, by the radio terminal apparatus, information regarding a permission condition of inter-terminal direct communication which is direct communication between the radio terminal apparatuses from the radio base station apparatus;
a step of storing, by the radio terminal apparatus, the received information regarding the permission condition in an inter-terminal direct communication information storage unit; and
a step of controlling, by the radio terminal apparatus, the inter-terminal direct communication based on the permission condition.

22. A computer program causing a computer of a radio base station apparatus of a radio communication system in which communication is possible between radio terminal apparatuses via the radio base station apparatus to execute:
a step of storing information regarding a permission condition of inter-terminal direct communication which is direct communication between the radio terminal apparatuses in an inter-terminal direct communication permission condition storage unit; and
a step of controlling execution of the inter-terminal direct communication based on the permission condition.

23. A computer program causing a computer of a radio terminal apparatus of a radio communication system in which communication is possible between radio terminal apparatuses via a radio base station apparatus to execute:
an inter-terminal direct communication control step of controlling inter-terminal direct communication which is direct communication between the radio terminal apparatuses,
wherein, in the inter-terminal direct communication control step, whether to execute the inter-terminal direct communication is determined based on information transmitted from the radio base station apparatus and indicating whether execution of the inter-terminal direct communication is possible.

24. A computer program causing a computer of a radio base station apparatus of a radio communication system in which communication is possible between radio terminal apparatuses via the radio base station apparatus to execute:
a step of storing information regarding a permission condition of inter-terminal direct communication which is direct communication between the radio terminal apparatuses in an inter-terminal direct communication permission condition storage unit; and
a step of transmitting the information regarding the permission condition to a radio terminal apparatus.

25. A computer program causing a computer of a radio terminal apparatus of a radio communication system in which communication is possible between radio terminal apparatuses via a radio base station apparatus to execute:
a step of receiving information regarding a permission condition of inter-terminal direct communication which is direct communication between the radio terminal apparatuses from the radio base station apparatus;
a step of storing the received information regarding the permission condition in an inter-terminal direct communication information storage unit; and
a step of controlling the inter-terminal direct communication based on the permission condition.
